# EUROPEAN PATENT APPLICATION

(11) **EP 2 829 520 A1**
(43) Date of publication of application: **28.01.2015**
(21) Application number: 14783992.2
(22) Date of filing: 23.04.2014
(51) Int. Cl.: C02F 11/12, C02F 3/34

(54) **NON-DISCHARGE METHOD FOR TREATING HIGHLY CONCENTRATED ORGANIC WASTE WATER USING BIO-EVAPORATION**

(30) Priority: 23.04.2013 KR 20130044961
(71) Applicant: Myongji University Industry and Academia Cooperation Foundation, Gyeonggi-do 449-728 (KR)
(72) Inventor: JAHNG, Deokjin, Seongnam-si Gyeonggi-do 463-730 (KR); YANG, Benqin, Yongin-si Gyeonggi-do 449-728 (KR)
(74) Representative: Franke, Dirk
(86) International application number: PCT/KR2014/003527
(87) International publication number: WO 2014/175646

(57) **Abstract**

Disclosed herein is a method for zero-discharge treatment of high-concentration organic wastewater by mixing sludge with high-concentration organic wastewater. The sludge is biodried sludge prepared by a method including preparing a sludge mixture consisting of belt-pressed sludge and dried sludge; and collecting the sludge mixture when its temperature finally becomes stable by returning to room temperature. The high-concentration organic wastewater used contained small particles of pulverized food waste having a diameter of 1 mm or less. The treatment was performed by decomposing the organic materials using microorganisms contained in the sludge via metabolism, followed by water evaporation caused by the metabolic heat generated by the decomposition of the organic materials, in which the microbial metabolism was performed under an aerobic condition.

## Description

### BACKGROUND OF THE INVENTION

### 1. Field of the Invention

The present invention relates generally to a method for zero-discharge treatment of high-concentration organic wastewater via bioevaporation and, more particularly, to a method for zero-discharge treatment of high-concentration organic wastewater via bioevaporation by mixing sludge with high-concentration organic wastewater.

### 2. Description of the Related Art

As well known in the art, wastewater discharged from food, leather, chemical and paper industries generally contains high-concentration organic materials. The high-concentration organic wastewater often spoils the beauty of the environment by generating mucilage, increasing the concentration of toxic materials in the water discharge area thereby seriously affecting local aquatic ecosystems. Also, high-concentration organic wastewater is one of the major reasons for clogging wastewater pipes.

The traditional activated sludge treatment method is simple and cost-effective and thus has been widely used for treating various kinds of wastewaters. However, the activated sludge treatment method has a disadvantage that its treatment is restricted to low-concentration organic wastewater even though appropriately adapted microorganisms are employed. Accordingly, an anaerobic biological treatment such as anaerobic digestion has been widely used to treat the high-concentration organic wastewater. However, anaerobic digestion also has disadvantages that the method requires a start-up time for at least 8 to 12 weeks, methanogens are vulnerable to various toxic materials, control problems often occur during the process of anaerobic digestion, etc. Additionally, anaerobic digestion generates anaerobic sludge and wastewater, and the wastewater requires an additional treatment due to high contents of biochemical oxygen demand (BOD), suspended solids (SS), total nitrogen (TN), total phosphorus (TP) and other reduced materials contained therein.

An improved anaerobic treatment such as upflow anaerobic sludge blanket (UASB) has been known effective for treating wastewater with high BOD. However, the method also has a disadvantage that the high solid content under a condition of limited hydrolysis delays sludge formation thus severely inhibiting microbial metabolism.

An autothermal thermophilic aerobic digestion (ATAD) process can maintain high temperature ranging from 50 to 60°C due to the heat generated during the aerobic decomposition of organic materials. Due to the high temperature, the ATAD process can reduce the content of volatile solids (hereinafter, 'VS') by 35 - 45%, and also lower the BOD of wastewater within a short period of hydraulic retention time (HRT) ranging from 3 to 6 days. Additionally, the ATAD process can produce class A biosolids because it enables pasteurization by high temperature. However, the ATAD process has disadvantages such as the high expenses required for power supply associated with aeration and polymers used for dewatering sludge.

Membrane separation processes such as reverse osmosis, ultra-filtration, and micro-filtration, separate water from contaminants according to the pore size of a membrane, and concentrated wastewater will remain as a byproduct. However, high-concentration wastewater requires a considerable amount of energy for performing the processes and it is thus difficult to obtain clean water via the membrane separation processes.

To solve the problems described above, wastewater may be evaporated instead of obtaining clean water. If it is possible to remove both water and organic materials present in the wastewater with minimum energy consumption the method will be the most ideal way of treating wastewater without creating discharge.

The term 'evaporation', as used herein, refers to a process of converting water from a liquid to a gas. Additionally, the term 'heat of evaporation', as used herein, refers to the amount of heat absorption of a substance per unit of mass during the conversion of the substance from a liquid to a gas. The heat of water evaporation is influenced by diffusion of water molecules from a water surface as well as convection transport of water molecules from the water surface under atmospheric pressure. The diffusion rate of water vapor is determined by the difference between the saturated vapor pressure of water and the real vapor pressure of water. Furthermore, the saturated vapor pressure of water is determined according to the temperature of water surface and atmospheric temperature.

The term 'thermal drying', as used herein, refers to a method of evaporating water from a wet waste by continuously supplying heat, generated using a fuel, to the wet waste. Thermal drying is one of the common methods used for treating wet wastes. Here, wet wastes are dried until they reach the predetermined moisture content (MC). It is practically impossible to evaporate all moisture contained in wet waste because of an economic infeasibility regarding fuel consumption. However, in the case of a heat supply not requiring consumption of an expensive fuel, thermal drying may be used as one of the methods for treating wastewater.

The term 'metabolic heat', as used herein, refers to heat generated during microbial metabolism, in which the higher the concentration of a substrate among culturing conditions for a given microorganism, the larger the amount of metabolic heat produced thereof. There is a difference in the amount of energy produced between aerobic metabolism and anaerobic metabolism. In anaerobic metabolism, 2 ATPs are produced per 1 mole of glucose, whereas 38 ATPs are produced in aerobic metabolism per 1 mole of glucose. Accordingly, the greater the oxygen consumption for a given microorganism via aerobic metabolism the higher the activity and heat production rate of the microorganism.

The metabolic heat produced during the growth of a microorganism may be calculated via the heat of combustion of a substrate and cellular materials. This is because the heat of combustion for a substrate is the same as the total of the metabolic heat generated by the microorganism and the heat of combustion newly synthesized by the cellular materials. If the maintenance metabolism occurs without a new synthesis, the heat of combustion of a substrate may be released 100% in the form of a metabolic heat.

In performing composting and biodrying processes, the heat generated by biological oxidation of biodegradable volatile solids ('BVS' hereinafter) can increase the ambient temperature, and induce water evaporation. Also, in ATAD process, metabolic heat is known as one of the factors capable of maintaining a reactor at high temperatures. Furthermore, the increase in temperature observed during the composting process is also due to the metabolic heat produced during the decomposition of organic materials by a microorganism. The wastewater generated during a co-composting process is mixed with a fertilizer to control the moisture content and provide a biodegradable organic material. The process is mainly performed in order to stabilize solid wastes rather than to evaporate wastewater.

### SUMMARY OF THE INVENTION

Accordingly, the present invention has been made keeping in mind the above problems occurring in the prior art, and an object of the present invention is to provide a method for zero-discharge treatment of high-concentration organic wastewater.

Another object of the present invention is to provide a method for zero-discharge treatment of high-concentration organic wastewater via bioevaporation.

A further object of the present invention is to provide a method for zero-discharge treatment of high-concentration organic wastewater via bioevaporation caused by mixing sludge with high-concentration organic wastewater.

A still further object of the present invention is to provide a method for via bioevaporation caused by mixing biodried sludge with high-concentration organic wastewater.

In order to accomplish the above objects, the inventors of the present invention continued their efforts to find a method for applying thermal drying utilizing the metabolic heat of microorganisms to wastewater treatment while resolving the problems in treating the high-concentration organic wastewater described above, and finally succeeded in developing 'a method for zero-discharge treatment of high-concentration organic wastewater via bioevaporation' using the metabolic heat of microorganisms generated during the decomposition of BVS contained in the wastewater, and completed the present invention.

The present invention provides a method for zero-discharge treatment of high-concentration organic wastewater via bioevaporation, in which the wastewater is treated by mixing sludge with high-concentration organic wastewater.

The term 'sludge', as used herein, refers to floating materials in water that have collected as sediment at bottom of the water, and is generated in large volume as byproducts of sewage and industrial wastewater. Sludge is generally produced via solid-liquid separation during wastewater treatment. However, when treating wastewater containing organic materials as in the activated sludge treatment the sludge will consist of microorganisms generated while treating organic materials.

The term 'dried sludge', as used herein, refers to sludge which has been dried. The term 'Biodried sludge', as used herein, refers to sludge dried by heat generated during aerobic decomposition of organic materials by microorganisms contained in the sludge.

Because of various microorganisms contained in sludge, when sludge is mixed with high-concentration organic wastewater the microorganisms contained in the sludge become activated and decompose BVS contained in organic wastewater while releasing metabolic heat during the decomposition process. As such, sludge mainly provides organic wastewater-decomposing microorganisms.

The sludge is preferably biodried sludge. In a bioevaporation process, the amount of metabolic heat production also increases as the concentration of organic wastewater increases. Accordingly, the decrease in concentration of the resulting organic wastewater caused by mixing it with sludge should be minimized. Biodried sludge, having a lower moisture content than undried sludge, can minimize the decrease in the concentration of the mixed organic wastewater when it is mixed with the organic wastewater. Additionally, microorganisms can be activated faster in biodried sludge when added with water than in dried sludge. Preferably, biodried sludge should have a moisture content ranged from 55 to 70 wt%. When the moisture content is higher than 70 wt% it will further decrease the concentration of the mixture consisting of biodried sludge and high-concentration organic wastewater, and will not be advantageous in delivering oxygen for aerobic oxidation of high-concentration organic wastewater. In contrast, when the moisture content is lower than 55 wt% the activation of microorganisms becomes delayed which is undesirable.

Preferably, the biodried sludge may be prepared by a method including: preparing a sludge mixture consisting of belt-pressed sludge and dried sludge followed by air supply; and collecting the sludge mixture when its temperature becomes stable by returning to room temperature. When a mixture of belt-pressed sludge and dried sludge is prepared followed by air supply, the temperature of the sludge bed increases to from about 73 to about 75°C along with the BVS decomposition, and returns to room temperature.

When BVS decomposition is almost completed the water in sludge starts to evaporate partially, indicating the stabilization of the sludge temperature. Upon final stabilization to room temperature, the mixed sludge is collected and used as biodried sludge. Preferably, the mixture of belt-pressed sludge and dried sludge should have a moisture content ranged from 55 to 70 wt%. Preferably, the concentration of the high-concentration organic wastewater should be 120 g/L or higher. This is because all water contained in the organic wastewater can be evaporated by the metabolic heat generated by microorganisms contained therein when the concentration of the high-concentration organic wastewater is 120 g/L or higher.

The high-concentration organic wastewater may be wastewater which includes food waste. However, the concentrated organic wastewater may not necessarily include food waste but may include any organic waste such as sewage, agricultural waste, livestock waste, industrial waste, etc.

Preferably, the food waste may be in the form of pulverized small particles having a diameter of 1 mm or less. When the food waste contained in the high-concentration organic wastewater is pulverized into small particles the surface area of the food waste to contact with the microorganisms contained therein increases, thereby accelerating the microorganisms' metabolic rate and consumption of the food waste. As the size of the pulverized particles of the food waste becomes smaller the metabolic rate of the microorganism becomes faster but the pulverization of food waste into smaller particles requires much more energy.

The treatment is performed by decomposing the VS using microorganisms contained in the sludge via metabolism, followed by water evaporation caused by the metabolic heat generated by the decomposition of organic materials. The microorganisms contained in the sludge metabolize the VS contained in the high-concentration organic wastewater. Here, the metabolism produces metabolic heat which is used to evaporate the water contained in the organic wastewater.

The metabolic heat produced during the growth of a microorganism may be calculated via the heat of combustion of a substrate and cellular materials. This is because the heat of combustion for a substrate is the same as the total of the metabolic heat generated by the microorganism and the heat of combustion newly synthesized by the cellular materials. If the maintenance metabolism occurs without a new synthesis the heat of combustion of a substrate may be released 100% in the form of metabolic heat.

The sludge may be sewage sludge, and the microorganisms may be those included in the sewage sludge. However, the microorganisms are not limited thereto but any microorganisms contained in organic wastewater which are capable of decomposing VS may be used.

The metabolism is preferably aerobic metabolism. There is a difference in the amount of energy produced between aerobic metabolism and anaerobic metabolism. In anaerobic metabolism, two moles of ATP are produced per mole of glucose, whereas 38 moles of ATP are produced in aerobic metabolism per mole of glucose. In this regard, when taking the advantage of aerobic metabolism, a given microorganism may be greater in activity and heat production rate. Accordingly, for evaporating organic wastewater by a bioevaporation process using metabolic heat produced by a microorganism, it is preferred that aerobic metabolism with a higher heat production rate be used.

The treatment may be performed in a reactor. In particular, the reactor may be insulated from heat using a heat insulating material. The heat-insulated reactor can minimize heat loss thus increasing the rate of bioevaporation. Preferably, the reactor is supplied with air. This is because the microbial metabolism used for bioevaporation is aerobic metabolism requiring a continuous oxygen supply.

Preferably, the air may be dehumidified air because dehumidified air can maximize the effect of evaporating water in the reactor. Preferably, the air may be supplied at a rate ranging from 0.03 to 0.2 m³/kg_{TS}·hr. If the air is supplied faster than the higher limit it will increase energy consumption which is not desirable, whereas when air is supplied below the lower limit aerobic metabolism may be inhibited due to insufficient oxygen within the reactor.

Preferably, the treatment may be performed while stirring the mixture of sludge and high-concentration organic wastewater. The inhibition of the microbial metabolism can be prevented by mixing the sludge and the high-concentration organic wastewater via stirring.

Preferably, the treatment may be performed until the temperature of the mixture of the sludge and the high-concentration organic wastewater becomes stable by returning to room temperature after an increase due to the metabolic heat.

The returning of the temperature of the mixture between the sludge and the high-concentration organic wastewater back to room temperature indicates that the metabolic process on organic wastewater by microorganisms has been completed.

### ADVANTAGEOUS EFFECTS

The present invention provides a method for zero-discharge treatment of high-concentration organic wastewater via a novel bioevaporation process. The BVS contained in the high-concentration organic wastewater can be decomposed via aerobic metabolism by microorganisms, and metabolic heat is produced during the metabolism. The metabolic heat removes water contained in the organic wastewater. A complete removal of water from the organic wastewater can be achieved when the VS concentration of glucose and food waste powder is 120 g/L. Also, the BVS contained in the organic wastewater can be also removed completely.

Accordingly, the method of the present invention utilizing a bioevaporation process has advantages that it can minimize energy consumption in treating organic wastewater, enable a zero-discharge treatment of the organic wastewater, and it is environment-friendly.

### BREIF DESCRIPTION OF THE DRAWINGS

The above and other objects, features and other advantages of the present invention will be more clearly understood from the following detailed description taken in conjunction with the accompanying drawings, in which:
FIG. 1 is a schematic diagram of a 28.3 L reactor for performing bioevaporation equipped with a gas analyzer;
FIG. 2 is a schematic diagram of a 2.16 L reactor for performing bioevaporation;
FIG. 3 is a graph showing the temperature change of the sludge bed during the bioevaporation process using the glucose solution prepared in Example 1 of the present invention;
FIG. 4 is a graph showing the change in concentration of carbon dioxide and oxygen of the exit gas released during the bioevaporation process using the glucose solution prepared in Example 1 of the present invention;
FIG. 5 is a graph showing the contents of moisture and volatile solids of the sludge bed during the bioevaporation process using the glucose solution prepared in Example 1 of the present invention;
FIG. 6 is a graph showing the added/removed amount of water and VS during the bioevaporation process using the glucose solution prepared in Example 1 of the present invention;
FIG. 7 is a graph showing the temperature change of the sludge bed during the bioevaporation process using the glucose solutions prepared in Examples 2 - 6 and Comparative Example of the present invention;
FIG. 8 is a graph showing the amount of heat produced during the bioevaporation process using the glucose solutions prepared in Examples 2 - 6 and Comparative Example of the present invention;
FIG. 9 is a graph showing the ratio of the amount of removed water relative to that of added water during the bioevaporation process using the glucose solutions prepared in Examples 2 - 6 and Comparative Example of the present invention;
FIG. 10 is a graph showing the temperature change in the sludge bed during the bioevaporation process using the solution of food waste powder prepared in Example 7 of the present invention;
FIG. 11 is a graph showing the change in concentration of carbon dioxide and oxygen of the exit gas released during the bioevaporation process using the solution of food waste powder prepared in Example 7 of the present invention;
FIG. 12 is a graph showing the contents of moisture and VS of the sludge bed during the bioevaporation process using the solution of food waste powder prepared in Example 7 of the present invention;
FIG. 13 is a graph showing the amounts of removed water and the added water and VS added to or removed from the sludge bed during the bioevaporation process using the solution of food waste powder prepared in Example 7 of the present invention;
FIG. 14 is a graph showing the temperature change during the bioevaporation process using the solutions of food waste powder prepared in Examples 7 - 11 and Comparative Example of the present invention;
FIG. 15 is a graph showing the amount of heat produced during the bioevaporation process using the solutions of food waste powder prepared in Examples 7 - 11 and Comparative Example of the present invention; and
FIG. 16 is a graph showing the ratio of the amount of removed water relative to that of added water during the bioevaporation process using the solutions of food waste powder prepared in Examples 7 - 11 and Comparative Example of the present invention.

### DESCRIPTION OF THE PREFERRED EMBODIMENTS

Hereinbelow, preferred embodiments of the present invention will be described in detail with reference to the accompanying drawings.

### Experimental Equipments and Materials

### Experimental Equipment 1: 28.3 L Cylindrical Reactor

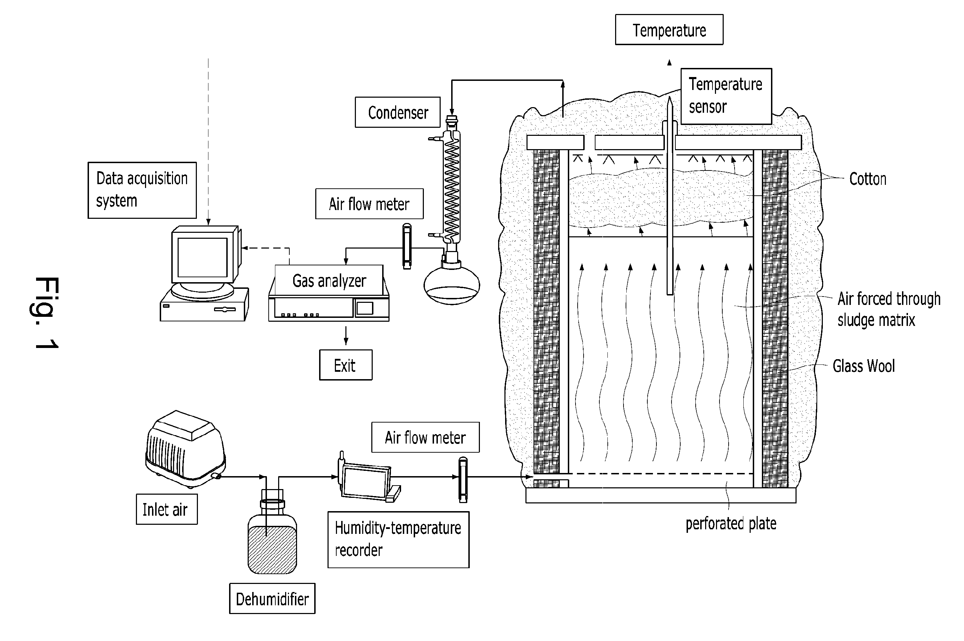

A Bioevaporation process was performed using a 28.3 L air-tight cylindrical reactor made of polymethyl methacrylate (PMMA) (diameter: 300 mm & height: 450 mm). As shown in FIG. 1, the reactor was equipped with a gas analyzer (Multi-Master, Sensoronic Co., Ltd, Korea). The reactor was wrapped with 40 mm-thick glass wool and 60 mm-thick cotton. The head space of the reactor was filled with cotton in order to prevent heat loss and prevent water vapor condensation. To support a sludge matrix and mediate aeration, a perforated plate (diameter: 1 mm) covered with a steel wire mesh disc (pore diameter: 0.1 mm) was installed 40 mm above the bottom plate. Room air was pumped into the reactor at a rate of 2.04 L/min. To increase the moisture holding capacity of the airflow, the air was dehumidified using a silica gel before entering into the reactor. The relative humidity (RH) of the air was measured by a humidity-temperature chat recorder (RH520, Extech Instruments Corp., Nashua, New Hampshire, U.S.A.). The dehumidified air was supplied into the lower end of the reactor, and the exit gas was collected from the upper part of the reactor for the analysis of the amounts of carbon dioxide and oxygen. To prevent the damage to the sensor, the exit gas was cooled by passing it through a condenser for vapor condensation before the exit gas reaches the gas analyzer. The temperature of the sludge matrix was measured by a temperature sensor installed 150 mm apart from the external wall of the reactor, and 200 mm above from the lower end of the reactor.

### Experimental Equipment 2: 2.16 L Styrofoam Reactor

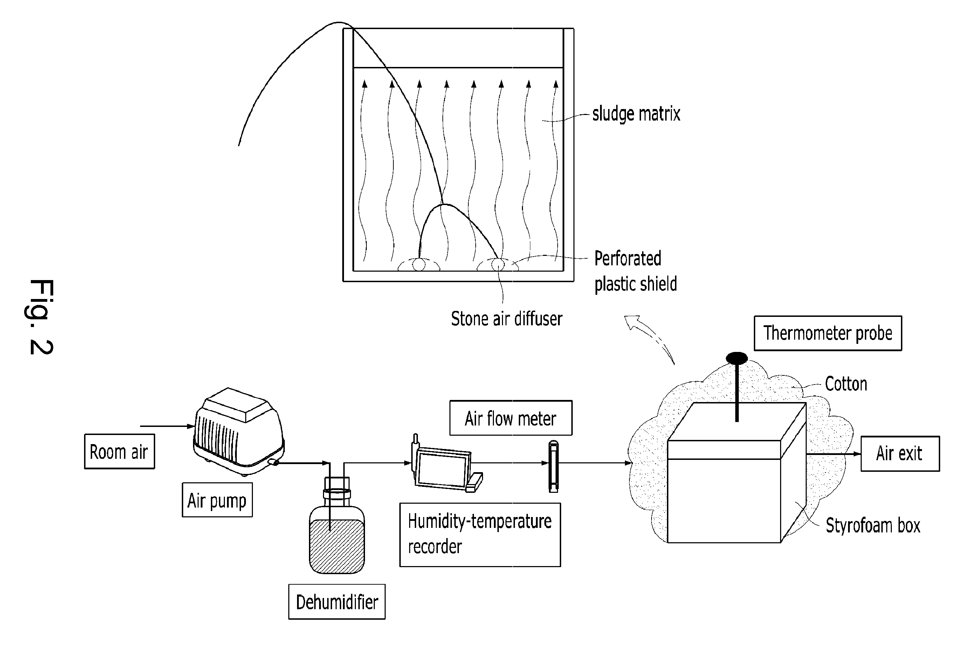

A Bioevaporation process was performed using a Styrofoam box as another reactor with a volume of 2.16 L and a thickness of 13 mm. The reactor was manufactured as shown in FIG. 2 (length: 156 mm, width: 125 mm, & height: 111 mm). To minimize heat loss through the reactor wall, the reactor was wrapped with 60 mm-thick cotton fabrics. The dehumidified air was supplied into the reactor using a stone air diffuser disposed at a lower end of the reactor at a rate of 0.204 L/min. Additionally, the temperature of a sludge bed was measured by digital thermocouples installed 70 mm above from the lower end of the reactor.

### Experimental Material 1: Preparation of High-concentration Organic Wastewater

A Bioevaporation process was performed using a glucose solution and a solution of food waste powder as high-concentration organic wastewater. As a model for the high-concentration organic wastewater, a saturated glucose solution (610 g/L) was prepared by dissolving glucose powder in distilled water. Glucose solutions at varied concentrations ranged from 40 to 200 g/L were prepared by diluting the saturated glucose solution, and used to obtain the relationship between heat production and glucose concentration during the bioevaporation process. As for the high-concentration organic wastewater, a solution of food waste powder containing food waste collected from a college cafeteria was used. The major components of the food waste were noodles, rice, vegetables and a small amount of meat. The thus obtained food waste was used after pulverizing it into small particles with a diameter of 1 mm or less using an electric mixer. The solution of food waste powder was prepared so that its VS concentration became 194 g/L, and the thus prepared solution of food waste powder was in a paste-like phase. The solution of food waste powder was used after diluting it to make its VS concentration ranged from 40 to 194 g/L to obtain the relationship between heat production and food waste concentration.

### Experimental Material 2: Preparation of Biodried Sludge

Biodried sludge used as a microbial inoculation in the bioevaporation process was prepared. Belt-pressed sludge (moisture content: 82 wt%) in the amount of 7.57 kg collected from Yongin Sewage Treatment Plant, Korea, was mixed with 2.43 kg of air-dried sludge (moisture content: 12 wt%) within a 28.3 L reactor, and the moisture content of the sludge mixture became 65 wt%. Subsequently, the reactor was supplied with air to decompose the BVS in the sludge mixture. While the BVS was decomposed the temperature of the sludge bed increased to from about 73 to about 75°C, and then returned back to room temperature. When the BVS decomposition was almost completed the water in the sludge started to evaporate partially, indicating that the sludge temperature became stable. Upon completion of decomposition of the BVS and final stabilization of the sludge temperature back to room temperature, the sludge was used as biodried sludge.

### Method of Bioevaporation Experiment

Bioevaporation was performed by adding the high-concentration organic wastewater (the glucose solution or the solution of food waste powder) prepared above to the biodried sludge also prepared above. Specifically, when the glucose solution was used, 7.29 kg of the saturated glucose solution (610 g/L) was added to the 7.29 kg of the biodried sludge (moisture content: 56.5 wt%), whereas when the solution of food waste powder was used, 1,235 mL of the solution of food waste powder (VS concentration: 194 g/L) was added to 5.98 kg of biodried sludge (moisture content: 56.4 wt%). In other words, the organic loading rate ranged from 0.08 to 0.09 g VS per 1 g of unit biodried sludge. When the 2.16 L reactor was used, 0.73 kg of the belt-pressed sludge and 0.27 kg of the dried sludge were mixed together and biodried in the same manner as in the Preparation of Biodried Sludge. When the sludge BVS was decomposed and the sludge temperature became stable, glucose solutions (0 - 200 g/L) and the solutions of food waste powder (0 - 194 g VS/L) at different concentrations from each other were added to the biodried sludge. Here, the organic loading rate ranged from 0 to 0.08 g VS per 1 g of unit biodried sludge.

### Method of Analysis

In preparing the sludge, the reactor was not stirred until the temperature of the sludge bed cooled down to room temperature so as to maximize water evaporation while minimizing heat loss. The bioevaporation reactor was weighed when the sludge temperature reached room temperature. Then, the sludge was stirred and 30 g of the sludge sample was collected therefrom to measure moisture content and VS ratio of the sludge. The moisture content was analyzed by drying the sample in a drying oven (Model C-DO2, Changshin Science, Korea) set at 105°C for 24 hours. Furthermore, the VS ratio was analyzed by subjecting the sample to an electrical muffle furnace (CRF.M15.P, Sang sin Lab Technology, Korea) set at 550°C for 7 hours. The heat of combustion was measured by isoperibol oxygen bomb calorimeter (Model 6200, Parr Instrument Company, Moline, IL, U.S.A.).

### Equations used for Calculating the Amount of Heat Production and Heat Consumption

The amount of heat production and heat consumption during glucose metabolism by a microorganism were calculated based on the equations shown in Table 1 below.

**[Table 1]**

| | Details | | Equations |
|---|---|---|---|
| Heat production | Glucose metabolic heat | | Q_{glu} = R_{glu}. m_{glu} |
| | BVS metabolic heat within sludge | | Q_{BVS}= H_{BVS}. m_{BVS} |
| | Total metabolic heat | | Q_{bio} = Q_{glu}+Q_{BVS} |
| Heat consumption | Heat consumption by aeration | Sensible heat of inlet air | Q_{dryair} = mₐᵢᵣ. Cₐᵢᵣ. (Tₘ-Tₐ) |
| | | Sensible heat of water vapor | Q_{watvap} = mₐᵢᵣ. ω. C_{watvap}. (Tₘ-Tₐ) |
| | Heat consumption by evaporation | Latent heat of water | Qₑᵥₐₚₒ = mₑᵥₐ. L_{latwat} |
| | Heat consumption of sludge bed | Sensible heat of water | Q_{water} = m_{water}. C_{water}. ΔTₘ |
| | | Sensible heat of dry solid | Q_{solid} = m_{solid}. C_{solid}. ΔTₘ |
| | Heat consumption via conduction | | Q_{condu} = U. A. (Tₘ-Tₐ) |
| | Heat consumption via radiation | | Q_{radi} = σ. Aₜₒₚ. (Tₜ⁴-Tₐ⁴). Fₐ. Fₑ |

Q_{glu} = metabolic heat generated by glucose decomposition (kJ)
H_{glu} = heat of combustion of glucose (15.644 MJ per 1 kg of unit glucose)
m_{glu} = mass of glucose (kg)
Q_{BVS} = metabolic heat generated by degradation of sludge BVS (kJ)
H_{BVS} = heat of combustion of sludge BVS (21.0 MJ per 1 kg of unit BVS)
m_{BVS} = mass of sludge BVS (kg)
Q_{bio} = total metabolic heat generated biologically (kJ)
Q_{dryair} = consumed sensible heat by inlet dry air (kJ)
mₐᵢᵣ = mass of dry air (kg)
C_{dryair} = specific heat of dry air (1.004 kJ. kg⁻¹. C⁻¹)
Tₘ = temperature of sludge bed (°C)
Tₐ = ambient temperature (°C)
Q_{watvap} = consumed sensible heat by water vapor (kJ)
ω = the weight of water vapor on a dry air basis = (M_{H2O} / Mₐᵢᵣ). (pᵥ / P - Pv)
m_{H2O} = mass of actually-measured evaporated water (kg)
P = atmospheric pressure (mm Hg)
pᵥ = pᵥₛ. RH
pᵥₛ = 10 [a / (Tₘ + c) + b]
a, b, c = empirical constants in Antoine equation, with values of -2,238, 8.896 and 273, respectively.
RH = relative humidity
C_{watvap} = specific heat of water vapor (1.841 kJ. kg⁻¹. C⁻¹)
Qₑᵥₐₚₒ = consumed latent heat by removed water (kJ)
mₑᵥₐ = mass of evaporated water (kg)
L_{latwat} = latent heat of water evaporation (kJ. kg⁻¹)
Q_{water} = consumed sensible heat by water (kJ)
m_{water} = mass of water in sludge bed (kg)
C_{water} = specific heat of water (4.184 kJ. kg⁻¹. C⁻¹)
Q_{solid} = consumed sensible heat by dry solid (kJ)
m_{solid} = mass of dry solid in sludge bed (kg)
C_{solid} = specific heat of dried sewage sludge (1.046 kJ. kg⁻¹. C⁻¹)
Q_{condu} = heat loss by conduction (kJ)
U = the coefficient of heat transmittance (0.5×10⁻⁴ kJ. d⁻¹. m⁻². C⁻¹) of the reactor wall
A = surface area of reactor wall (m²)
Q_{radi} = heat loss by radiation (kJ)
o = Stefan Boltzmann constant (5.67×10⁻¹¹ kJ. s⁻¹. m⁻². K⁻⁴)
Aₜₒₚ = surface area of radiating body (m²)
Tₜ = temperature of the top surface of the reactor (°C)
Fₐ = a configuration factor to account for the relative position and geometry of objects (0.5, dimensionless)
Fₑ = the emissivity factor to account for non-black body radiation (0.85, dimensionless)

### Equations used for Calculating Amounts of Carbon Dioxide production, Water Evaporated, and Produced Water

The amounts of carbon dioxide production, water evaporated and water produced during the glucose metabolism by microorganisms were calculated by the equations shown in Table 2 below.

**[Table 2]**

| | Details | Equations |
|---|---|---|
| Carbon dioxide production | Production due to glucose decomposition | n_{CO2-glu} = 6. n_{glu} = 6. (m_{glu} / M_{glu}) |
| | Production due to decomposition of sludge BVS | n_{CO2-BVS} = 5. nBVS = 5. (m_{BVS} / M_{BVS}) |
| | Total theoretical production | n_{CO2} = n_{CO2-glu} + n_{CO2-BVS} |
| | Total production measured | n_{CO2-gas} = V_{CO2} / 22.4 (L/mol) = Vₐᵢᵣ. conc. / 22.4 (L/mol) = v. t . conc. / 22.4 (L/mol) = v. ∫t. conc.dt / 22.4 (L/mol) |
| Amount of water evaporated | Theoretical amount of evaporated water | m_{H2O-bio} = Q_{bio} / Lₗₐₜₑₙₜ |
| | Measured amount of evaporated water | m_{H2O} = Mᵢₙᵢₜᵢₐₗ. MCᵢₙᵢₜᵢₐₗ. M_{final}. MC_{final} |
| Amount of water produced | Amount produced by glucose decomposition | m_{H2O-glu} = 6. n_{glu}. M_{H2O} = 6. (m_{glu} / M_{glu}). M_{H2O} |
| | Amount produced by decomposition of sludge BVS | m_{H2O-BVS} = 2. n_{BVS}. M_{H2O} = 2. (m_{BVS} / M_{BVS}). M_{H2O} |

| | | |
|---|---|---|
| n_{CO2-glu} = molar number of CO₂ generated from glucose degradation (mol) n_{glu} = molar number of glucose (mol) m_{glu} = mass of glucose (kg) M_{glu} = molar mass of glucose (g. mol⁻¹) n_{CO2-BVS} = molar number of CO₂ generated from sludge BVS degradation (mol) n_{BVS} = number of moles of BVS (mol) M_{BVS} = molar mass of BVS (g. mol⁻¹) n_{CO2} = molar number of CO₂ (mol) n_{CO2-gas} = molar number of CO₂ measured by gas analyzer (mol) V_{CO2} = volume of CO₂ (L) Vₐᵢᵣ = volume of air (L) conc. = concentration in air m_{H2O-bio} = mass of theoretically calculated evaporated water (kg) Q_{bio} = total biologically generated metabolic heat (kJ) L_{latwat} = latent heat of water (kJ. kg⁻¹) m_{H2O} = mass of water evaporated as measured (kg) mᵢₙᵢₜᵢₐₗ = mass of sludge bed before bioevaporation (kg) MCᵢₙᵢₜᵢₐₗ = moisture content of sludge bed before bioevaporation (wt%) m_{final} = mass of sludge bed after bioevaporation (kg) MC_{final} = moisture content of sludge bed after bioevaporation (wt%) m_{H2O-glu} = mass of metabolic water from glucose M_{H2O} = molar mass of water (g. mol⁻¹) m_{H2O-BVS} = mass of metabolic water produced from sludge BVS (kg) M_{BVS} = molar mass of sludge BVS (g. mol⁻¹) | | |

### Examples and Comparative Example

A better understanding of the present invention may be obtained through the following Examples and the Comparative Example which set forth to illustrate, but are not to be construed as the limit of the present invention.

### Example 1: Bioevaporation using Glucose Solution

Bioevaporation was performed by mixing 404 mL glucose solution (610 g/L) with 7.29 kg biodried sludge (moisture content: 56.5 wt%), adding the mixture into a 28.3 L insulated reactor, followed by air supply thereinto at a rate of 2.04 L/min.

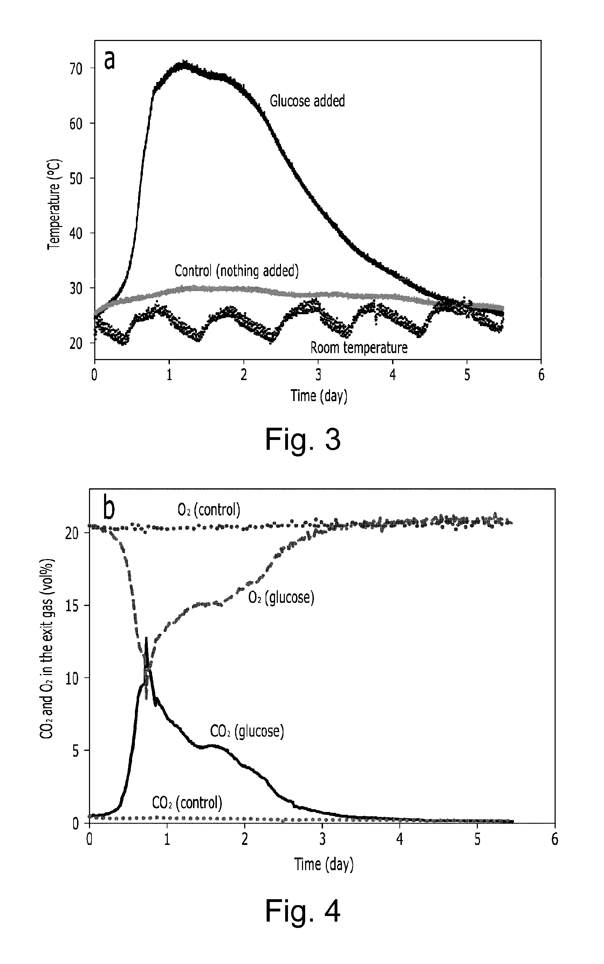

As shown in FIG. 3, the temperature of the reactor increased rapidly after adding a glucose solution thereinto.

The temperature reached 71.4°C after 28 hours, and returned to room temperature after 96 hours. However, the temperature of the control reactor where the glucose solution was not added was maintained at a temperature around room temperature. Upon reviewing the temperature change, it was confirmed that the microorganisms in the sludge bed utilized glucose as an energy source for their metabolism, and also the lag time was very short.

As shown in FIG. 4, when the reactor temperature increased the concentration of oxygen decreased while the concentration of carbon dioxide increased. More specifically, during the heat production, oxygen concentration decreased from 20.8 vol% to 8.8 vol%, whereas carbon dioxide concentration increased from 0.2 vol% to 12 vol%. Interestingly, the highest temperature point appeared about 12 hours after the lowest oxygen concentration point and the highest carbon dioxide concentration point. The phenomenon suggests that a certain period of time may be necessary to increase the reactor temperature by accumulating heat produced thereof. Upon reviewing the oxygen concentration, carbon dioxide concentration, and temperatures, it was confirmed that the glucose added was metabolized by microorganisms contained in the biodried sludge for about 4 days.

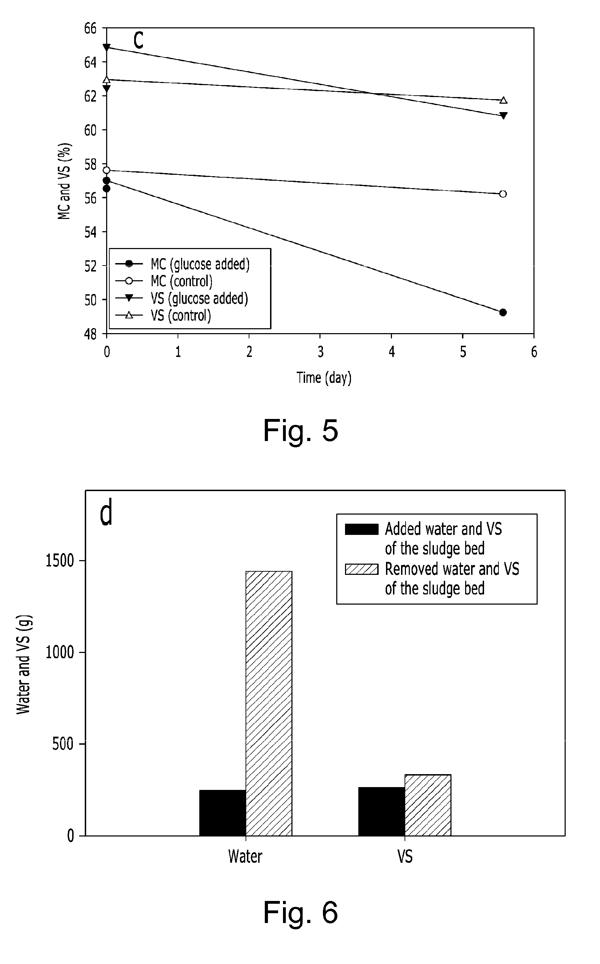

In order to confirm that water evaporation occurred along with glucose decomposition, the moisture content and the VS ratio of the sludge bed were measured. Since 246 g of water and 246 g of glucose were added in the form of a glucose solution into 7.29 kg of the biodried sludge (moisture content: 56.5 wt%, VS concentration: 62.5%), the moisture content was 57 wt%, and VS concentration was 64.9%, before the sludge bed was metabolized by the microorganisms. After the metabolism by the microorganisms, the metabolic heat generated by the glucose decomposition caused the water to evaporate thus reducing the moisture content to 49.2%, and the VS ratio to 60.9%, respectively (FIG. 5). By comparing the moisture content of the sludge bed before and after bioevaporation, it was confirmed that a total of 1,458 g of water was evaporated over 5.6 days via bioevaporation. The amount of the thus evaporated water was 5.93 times larger than 246 g of water added in the form of the glucose solution. Based on the VS concentration of the sludge bed, the amount of the VS consumption was calculated to be 315 g, which is larger than 246 g of the VS added in the form of the glucose solution. Accordingly, 69 g of the VS, i.e., the difference between the added amount and the consumed amount, was confirmed to be the amount of the biodried sludge removed thereof, which appears to be due to the biodegradable materials with a slow decomposition rate still remaining in the biodried sludge without being decomposed during the biodrying process.

Table 3 below reveals the amount of heat produced during the bioevaporation process utilizing the glucose solution, and where the thus produced heat is used.

**[Table 3]**

| | | | | | | | |
|---|---|---|---|---|---|---|---|
| Heat Production | Q_{glu} | | | Q_{BVS} | | | Q_{bio} |
| | 3848 | | | 1449 | | | 5297 |
| | (72.6%) | | | (27.4%) | | | (100%) |
| Heat | Humid Air | | Qₑᵥₐₚₒ | Sludge Bed | | Loss | Total |
| Consumption | Q_{dryair} | Q_{watvap} | | Q_{water} | Q_{solid} | (Q_{condu} + Q_{radi}) | Amount |
| | 410 | 59 | 3418 | 434 | 81 | 895 | 5297 |
| | (7.7%) | (1.1%) | (64.5%) | (8.2%) | (1.5%) | (16.9%) | (100%) |

| | | | | | | | |
|---|---|---|---|---|---|---|---|
| Q_{glu} = the metabolic heat (kJ) generated from glucose degradation; calculated based on the decrease in glucose concentration Q_{BVS} = the metabolic heat (kJ) generated from the degradation of the sludge BVS; calculated based on the reduced amount of the sludge BVS Q_{bio} = total biologically generated metabolic heat (kJ) Q_{dryair} = consumed sensible heat by inlet dry air (kJ) Q_{watvap} = consumed sensible heat by water vapor (kJ) Qₑᵥₐₚₒ = consumed latent heat by removed water (kJ) Q_{water} = consumed sensible heat by water (kJ) Q_{solid} = consumed sensible heat by dry solid (kJ) Q_{condu} + Q_{radi} = heat loss by conduction + heat loss by radiation (kJ), calculated based on the difference between the total heat production and other heat consumption | | | | | | | |

The amount of the energy produced during glucose oxidation via microbial metabolism was assumed to be the same as that of the heat of combustion of glucose (15.644 MJ per 1 kg of unit glucose). When the added glucose of 246 g was consumed completely it produced 3,848 kJ of heat, which corresponded to 72.6% of the total heat produced by the microorganisms. The amount of heat produced by the decomposition of biodegradable organic material (69 g) with a slow decomposition rate in the biodried sludge was assumed to be the same as that of the heat of the combustion of the sludge BVS (21.0 MJ per 1 kg of unit BVS). Based on the assumption, 1,449 kJ of heat, corresponding to 27.4% of the total amount of heat produced by the microorganisms, was calculated to be the amount of heat produced by the decomposition of the sludge BVS.

Additionally, the heat produced is absorbed into the sludge bed along with the humid air, and used for water evaporation. Besides, the heat is also lost by thermal conduction and thermal radiation. The specific heat of dry air, water vapor, water and dry solid are 1.004, 1.841, 4.184 and 1.046 kJ. kg⁻¹. °C⁻¹, respectively. The sensible heat used for increasing the temperature of the inlet air (Q_{dryair}), water vapor (Q_{watvap}), water (Q_{water}) and dry solid (Q_{solid}) were calculated based on their specific heat capacity and temperature change (Tₘ-Tₐ) using equations shown in Table 1. The masses of inlet dry air and water vapor were calculated using the air-supplying rate (2.04 L/min), relative humidity (10%) and a period for bioevaporation (5.6 days). As a result, the sensible heat used for increasing the temperature of the inlet air (Q_{dryair}), water vapor (Q_{watvap}), water (Q_{water}) and dry solid (Q_{solid}), as calculated, were 410, 59, 434 and 81 kJ, respectively. Since 1,458 g of water was evaporated from the sludge bed, and the latent heat by water evaporation was 2,344 kJ/kg, the latent heat used for water evaporation was 3,418 kJ, corresponding to 64.5% of the total heat produced by the microorganisms. According to the equations shown in Table 1, the calculated heat loss by conduction and radiation was only 45 kJ. However, apart from the equations above, the actual heat loss by conduction and radiation calculated by the difference between the total heat produced and the heat consumed by air, sludge, and water evaporation, was 895 kJ, corresponding to 16.9% of the total heat produced.

Assuming that 246 g of glucose was completely decomposed into carbon dioxide, and the energy produced from the glucose decomposition was all released via heat, the amount of water removed by evaporation would be 1,068 g. The amount is 390 g smaller than 1,458 g, the total amount of water measured above, thus confirming that the extra 390 g of water was removed from the biodried sludge.

As shown in Chemical Reactions 1 and 2 below, the molar number of carbon dioxide produced from the reaction is 6 times of that of glucose used therein, and 5 times of that of the sludge BVS used therein.

[Chemical Reaction 1] C₆H₁₂O₆ + 6O₂ -> 6CO₂ + 6H₂O + energy

[Chemical Reaction 2] C₅H₇NO₂ + 5O₂ -> 5CO₂ + 2H₂O + NH₃ + energy

Since 1.367 mole of glucose (246 g) and 0.61 mole of sludge BVS (69 g) were decomposed, the theoretical amount of carbon dioxide produced from the decomposition of the glucose and the sludge BVS is 8.2 moles and 3.05 moles, respectively. Accordingly, the total theoretical amount of carbon dioxide production is 11.25 moles as shown in Table 4.

**[Table 4]**

| CO₂ Production (mol) | n_{CO2-glu} | n_{CO2-BVS} | Total theoretical production | Measured total production |
|---|---|---|---|---|
| | 8.2 | 3.05 | 11.25 | 11.59 |
| H₂O evaporation (g) | m_{H20-bio} | | m_{H20} | |
| | 2358 | | 1458 | |
| H₂O generation (g) | m_{H20-glu} | m_{H20-BVS} | Total H₂0 | |
| | 147.6 | 22.0 | 169.6 | |

| | | | | |
|---|---|---|---|---|
| n_{CO2-glu} = molar number of CO₂ generated from glucose degradation (mol); the theoretical amount of CO₂ generated from glucose degradation was calculated n_{CO2-BVS} = molar number of CO₂ generated from sludge BVS degradation (mol); the theoretical amount of carbon dioxide generated from BVS was calculated m_{H2O-bio} = mass of theoretically calculated evaporated water (kg) m_{H2O} = mass of actually-measured evaporated water (kg) m_{H2O-glu} = mass of metabolic water from glucose (kg) ; calculated based on equation 1 above m_{H2O-BVS} = mass of metabolic water produced from sludge BVS (kg) ; calculated based on equation 2 above | | | | |

The concentration of carbon dioxide in the inlet gas and the exit gas calculated based on the equation in Table 2 above was 11.59 moles. Accordingly, it was confirmed that the theoretically calculated carbon dioxide production was very close to the actual carbon dioxide production within a reasonable range.

Assuming that the total heat generated by microorganisms was used in evaporating water, the theoretically-calculated evaporated water (m_{H20-bio}) is 2, 358 g. The value was obtained dividing the total heat by the latent heat of water evaporation. However, the calculation based on the mass reduction in the sludge bed and the moisture content revealed that the amount of the actually evaporated water (m_{H20}) is 1,458 g, corresponding to 61.8% of the theoretical value.

Water production by microbial metabolism may be calculated in the same manner as in calculating the theoretical carbon dioxide production using the equations 1 and 2 above. The total water production by microbial metabolism was shown to be 169.6 g, in which 147.6 g was generated from the glucose degradation, and 22.0 g from the sludge BVS degradation. It was confirmed that the water production by microbial metabolism could lead to an underestimation of 1,458 g, i.e., the amount of water thought to have been removed.

### Examples 2∼6 and Comparative Example: Bioevaporation performed using Glucose Solution

In order to identify the relationship between glucose concentration and water evaporation, bioevaporation experiments were performed using the varied glucose solutions prepared in Example 2 - 6 and Comparative Example.

The heat production and water evaporation according to the theoretically-simulated glucose concentrations of Example 2 - 6 and Comparative Example 1 are shown in Table 5 below.

**[Table 5]**

| Ex. # | Glucose conc. (g/L) | Metabolic heat (kJ) | Evaporated water (g) | Water in Glucose sol 'n(g) | Remnant water (g) | Water removal (%) |
|---|---|---|---|---|---|---|
| C. | 0 | 0 | 0 | 1000 | 1000 | 0 |
| 2 | 40 | 626 | 174 | 962 | 788 | 18.1 |
| 3 | 80 | 1252 | 348 | 943 | 595 | 36.9 |
| 4 | 120 | 1877 | 521 | 926 | 405 | 56.3 |
| 5 | 160 | 2503 | 695 | 893 | 198 | 77.8 |
| 6 | 200 | 3129 | 869 | 855 | -14 | 101.6 |

In order to calculate the values in Table 5 above, 65% of the heat generated by the microbial metabolism was assumed to have been used for water evaporation because the heat used for the water evaporation in Example 1 was found to be 64.5%. Additionally, the average temperature for performing the bioevaporation was assumed to be 50°C, and the latent heat of the water evaporation as 2,344 kJ/kg. The amount of water evaporation by the metabolic heat was calculated by dividing the heat used for water evaporation with the latent heat. Increasing the glucose concentration increased the water removal rate proportionally because a glucose solution at a higher concentration produced a larger amount of metabolic heat and contained a lesser amount of water. When the glucose solution was 200 g/L, 3,129 kJ of heat was generated from 1 L of the glucose solution, and 869 g of water was evaporated thereby. Since 1 L of the glucose solution (200 g/L) contained 855 g of water, almost all water contained in the glucose solution appears to have been removed by the bioevaporation.

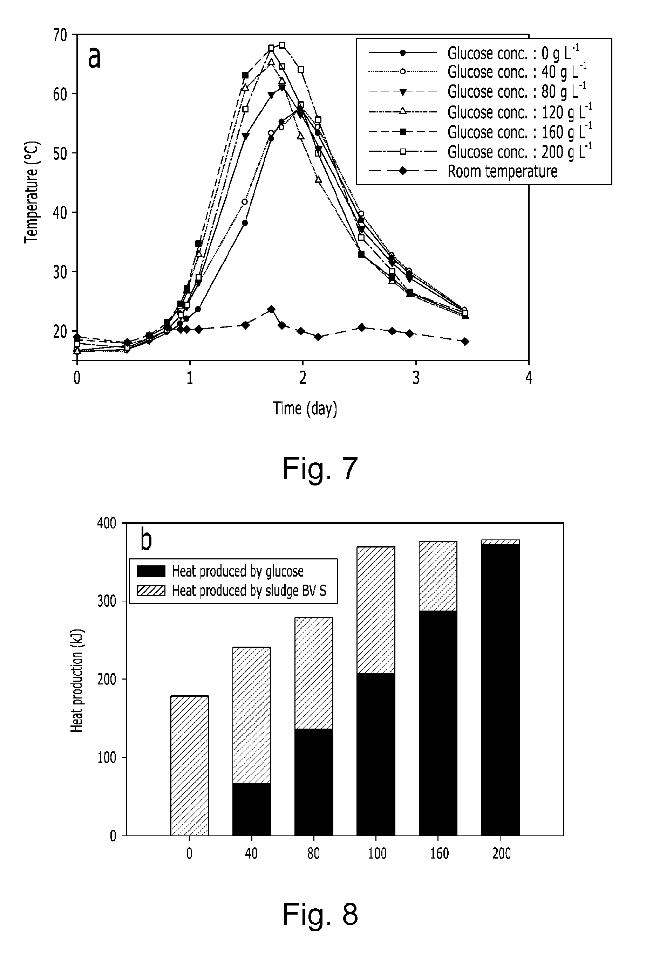

In order to experimentally verify the values shown in Table 5, bioevaporation was performed by adding prepared varied glucose concentrations to biodried sludge. The results are shown in FIGS. 7 to 9. As shown in FIG. 7, the temperature increased faster and became higher with the increase in the glucose solution, and the high temperature cycle was also maintained longer. In Comparative Example where the glucose concentration was 0 g/L, the temperature increased to 50°C even when only 100 mL of water was added because microorganisms were activated by the water added therein. The moisture content of the biodried sludge before adding water was 51.3 wt%, which is too low for the microorganisms to perform metabolism. Therefore, it was speculated that the microorganisms were unable to decompose the BVS contained in the biodried sludge before adding water thereto. The amount of the heat generated from the sludge BVS degradation was calculated based on the difference between the total heat production and the total heat of combustion from the added glucose. With the increase in the glucose concentration, the amount of water removed by the metabolic heat increased and also the moisture content of the sludge bed decreased. It is speculated that if the moisture content in the sludge bed after the depletion of the glucose was at an appropriate level the microorganisms could continue to be involved in the degradation activity. However, the moisture content becomes significantly lowered upon depletion of glucose, thereby making it difficult for the microorganisms to perform degradation due to their decreased activity. According to the results shown in FIG. 8, the amount of heat generated from glucose degradation comes closer to the total heat production, and also the amount of water being removed increases with the increase in glucose concentration. Accordingly, it was confirmed again that the heat production and the amount of removed water correlate with the glucose concentration in the glucose solution.

### Examples 7 - 11 and Comparative Example: Bioevaporation performed using the Solution of Food Waste Powder

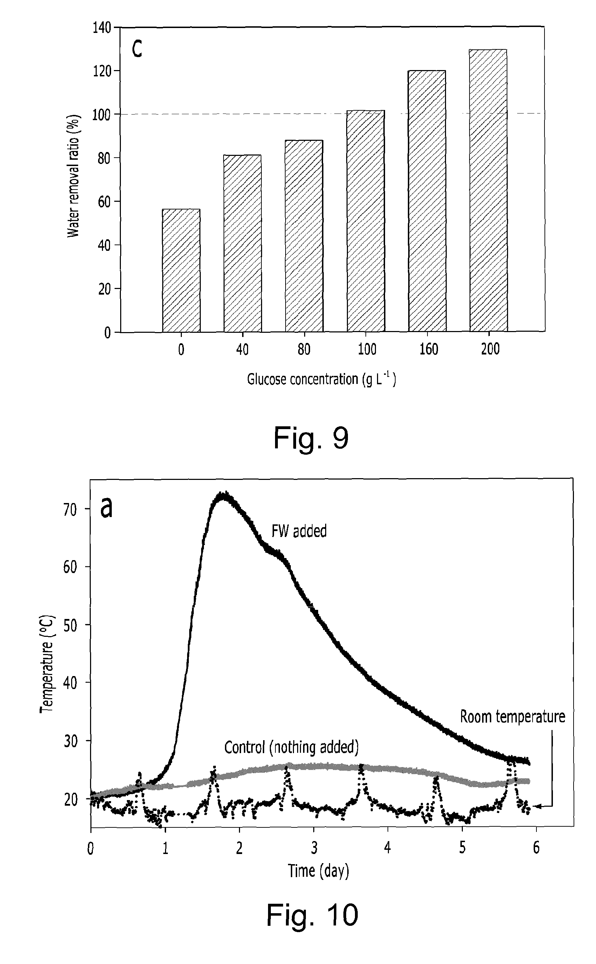

Bioevaporation experiments were performed to check whether a bioevaporation process may be actually applied to wastewater treatment, by mixing a solution of food waste, instead of a glucose solution, with the biodried sludge. The food waste powder was prepared at concentrations of 42, 82, 120, 157 and 194 g/L, and used in Examples 7 - 11, respectively. For Comparative Example, 100 mL of water without containing the food waste powder was used. The experimental results are shown in FIGS. 10 - 16. To mediate a fast microbial metabolism of the food waste, the food waste powder was prepared into fine particles having a diameter of 1 mm or less using an electric mixer. The VS content of the food waste powder in a dry state was 93.4% relative to the total solids.

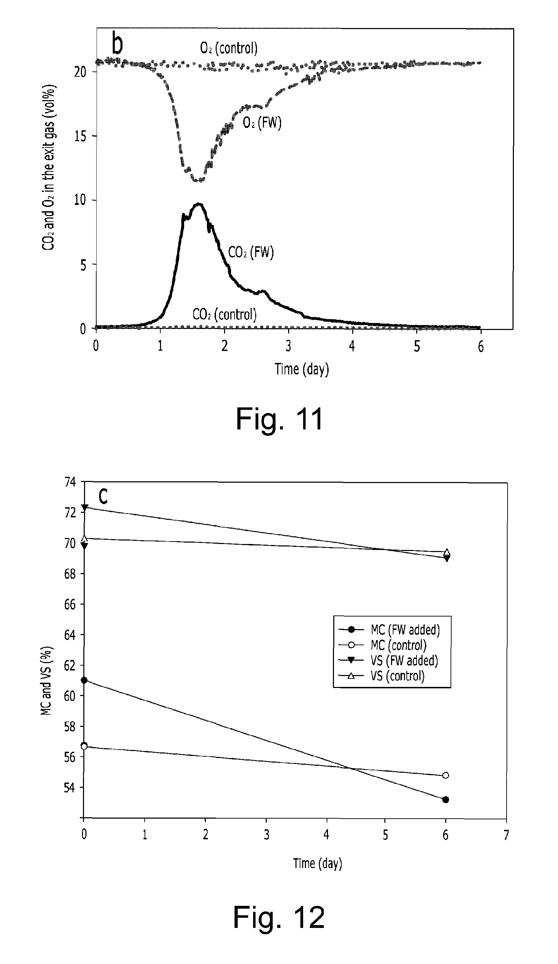

Since the solution of food waste powder (194 g VS/L) contained easily biodegradable VS, the temperature increased up to 73°C, as in the case of glucose. However, there was a slight difference from that of glucose. First of all, the lag time which was only 9.6 hours for glucose was about 24 hours for the food waste. Furthermore, the time required to reach the highest temperature increased to 1.8 days as compared to 1.3 days for glucose. FIG. 11 is a graph showing the components of an exit gas discharged during the bioevaporation process of the food waste. According to FIG. 11, the time required for reaching the highest CO₂ concentration and the lowest O₂ concentration has been extended. Because microorganisms cannot readily utilize polymer substrates, food waste containing a polymer substrate requires hydrolsis for decomposing the polymer substrates into small monomer molecules via a hydrolytic enzyme, thus causing a time delay as described above.

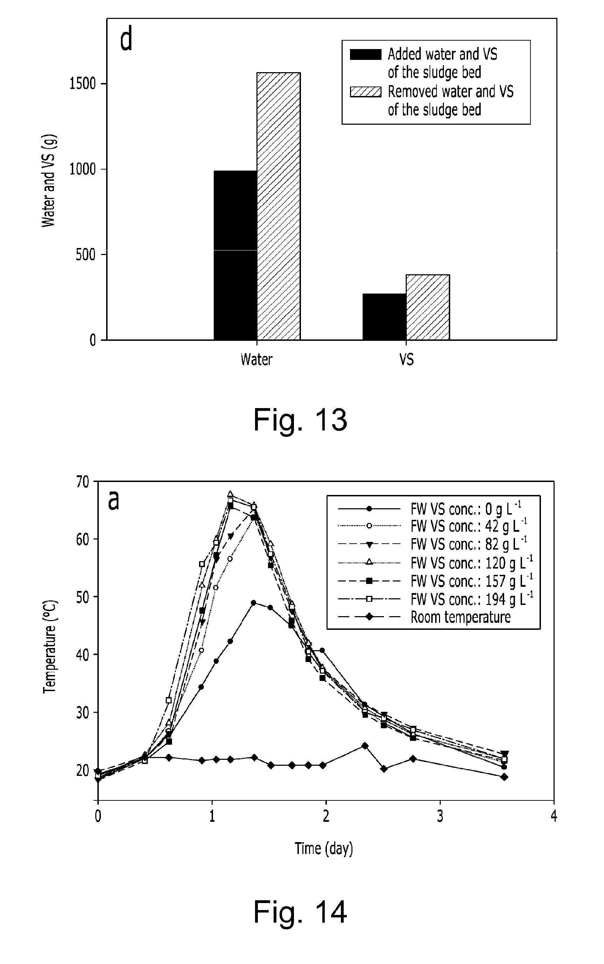

As shown in FIG. 12, the moisture content decreased from 61 wt% to 53 wt% during the 5.9 days of the bioevaporation process, and also the VS ratio dropped from 72.4% to 68.9%. Further, referring to FIG. 13, it was confirmed that a greater amount of water (1,560 g) than the amount of water (1,000 g) added in the form of a solution of food waste powder was evaporated by the metabolic heat generated from the BVS degradation. Assuming that the total BVS was 351 g and the BVS contained in the food waste was completely degraded upon calculation of the decrease in the mass of the sludge bed and the VS, it was confirmed that 240 g of 351 g was from the food waste degradation, and 111 g was from the sludge BVS degradation. In order to check the amount of energy contained in the solution of food waste powder, the heat of combustion of the food waste was measured by an oxygen bomb calorimeter, and it turned out to be 17.99 MJ/kg. According to other studies, the heat of combustion for carbohydrates, proteins, and fats is known to be 17.4, 23.4, and 39.3 MJ/kg, respectively. The main components of the food waste used in the Examples were rice and noodles, and thus the measurement results of the heat of combustion above are considered to be reliable comparable to the previously known results.

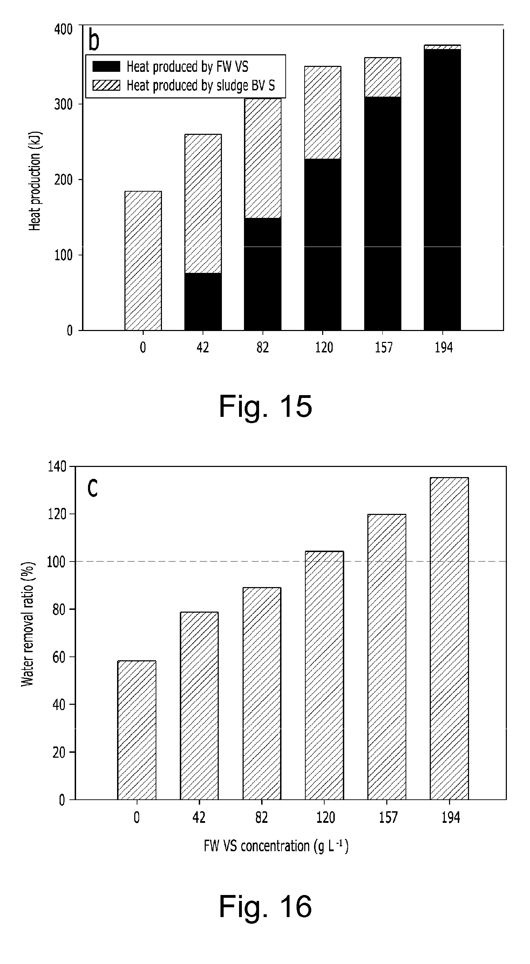

FIGS. 14 to 16 show graphs representing the effects of the bioevaporation process according to the concentration of the food waste. The graphs showed that the increase in the VS concentration from 0 to 194 g/L resulted in the increase in the temperature of the sludge bed. In the Comparative Example where only 100 mL of water was added without any food waste, the temperature increased close to 50°C because the BVS present in the sludge particles were degraded by the water added thereinto. In the Comparative Example not utilizing any food waste, the slowly-degrading BVS contained in the biodried sludge is degraded, thereby generating metabolic heat (FIG. 15). Furthermore, in the Comparative Example, the time required to reach the highest temperature was longer, thus confirming that food waste is a more preferred organic material by the microorganisms, and is also more biodegradable than the biodried sludge. The heat generated from the sludge BVS degradation was estimated by the difference between the total heat, calculated based on the mass and the moisture content, and the heat generated from the VS of the food waste. As shown in FIG. 16, as the VS of the food waste became higher, a larger amount of heat was generated from the food waste degradation, and an increased amount of water was evaporated. When the VS concentration was 194 g/L almost all heat was generated from the food waste degradation, and the water remaining in the biodried sludge was also removed. As in the case of glucose, the heat generated from the food waste as well as from the sludge BVS could evaporate all the water added along with the food waste, starting from when the VS concentration of the food waste was 120 g/L. From the foregoing, it was concluded that the bioevaporation process is applicable to the actual organic waste treatment. Additionally, the VS in the wastewater was completely removed during the bioevaporation process, and this is considered as having achieved the zero-discharge treatment of high-concentration organic wastewater. Furthermore, the energy required for the bioevaporation process is only that used for aeration of the reactor and the process does not require an additional heat supply. Besides, even for low-concentration sewage, which generates little metabolic heat for water evaporation, bioevaporation processing may be applicable by mixing the low-concentration sewage with other high-concentration organic wastes.

According to the present invention, there is provided a novel concept of a bioevaporation process to be used for the treatment of high-concentration organic wastewater. High-concentration organic wastewater, which contains biodegradable organic materials, can be degraded by the microorganisms in the biodried sludge via aerobic metabolism, and metabolic heat is generated therefrom during the metabolism. The bioevaporation process enables the generation of a larger amount of heat and also removes a larger amount of water from the organic wastewater as the VS concentration of the organic wastewater becomes higher. When the VS concentration of the glucose and the food waste powder was 120 g/L, the water and also the BVS contained in the wastewater were completely removed. Accordingly, the bioevaporation process of the present invention enables a zero-discharge treatment of wastewater.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method for zero-discharge treatment of high-concentration organic wastewater via bioevaporation, wherein the treatment is performed by mixing sludge with high-concentration organic wastewater.

2. The method of claim 1, wherein the sludge is biodried sludge.

3. The method of claim 2, wherein the biodried sludge has a moisture content ranged from 55 to 70 wt%.

4. The method of claim 2, wherein the biodried sludge is prepared by a method comprising:
preparing a sludge mixture consisting of belt-pressed sludge and dried sludge; and
collecting the sludge mixture when its temperature becomes stable to room temperature.

5. The method of claim 4, wherein the sludge mixture has a moisture content ranging from 55 to 70 wt%.

6. The method of claim 1, wherein the high-concentration organic wastewater has a volatile solids concentration of 120 g/L or higher.

7. The method of claim 1, wherein the high-concentration organic wastewater is wastewater including food waste.

8. The method of claim 7, wherein the food waste is in the form of pulverized small particles having a diameter of 1 mm or less.

9. The method of claim 1, wherein the treatment is performed by decomposing the volatile solids using microorganisms contained in the sludge via metabolism, followed by water evaporation caused by the metabolic heat generated by the decomposition of the volatile solids.

10. The method of claim 9, wherein the sludge is sewage sludge, and the microorganisms are those present in the sewage sludge.

11. The method of claim 9, wherein the metabolism is aerobic metabolism.

12. The method of claim 1, wherein the treatment is performed within a reactor.

13. The method of claim 12, wherein the reactor is insulated from external heat via a heat-insulating material.

14. The method of claim 12, wherein the reactor is supplied with air.

15. The method of claim 14, wherein the air is removed of moisture.

16. The method of claim 14, wherein the air is supplied at a rate ranged from 0.03 to 0.2 m³/kg_{TS}·hr.

17. The method of claim 1, wherein the treatment is performed while stirring the mixture of the sludge and the high-concentration organic wastewater.

18. The method of claim 1, wherein the treatment is performed until the temperature of the mixture of the sludge and the high-concentration organic wastewater becomes stable by returning to room temperature after an increase due to the metabolic heat.
